**Europäisches Patentamt**

(19) **European Patent Office**

**Office européen des brevets**

(11) Publication number: **0 134 332**
**B1**

(12) **EUROPEAN PATENT SPECIFICATION**

(45) Date of publication of patent specification: **12.08.87**

(51) Int. Cl.⁴: **B 01 J 29/06**

(21) Application number: **83304716.0**

(22) Date of filing: **15.08.83**

(54) **Treatment of zeolites.**

(43) Date of publication of application:
**20.03.85 Bulletin 85/12**

(45) Publication of the grant of the patent:
**12.08.87 Bulletin 87/33**

(84) Designated Contracting States:
**BE DE FR GB IT NL SE**

(56) References cited:
GB-A-2 079 737
US-A-3 702 312
US-A-4 374 296

(73) Proprietor: **MOBIL OIL CORPORATION**
**150 East 42nd Street**
**New York New York 10017 (US)**

(72) Inventor: **Chu, Pochen**
**1173 Ollerton Road**
**West Deptford New Jersey 08066 (US)**

(74) Representative: **Grundy, Derek George Ritchie et al**
**CARPMAELS & RANSFORD 43, Bloomsbury Square**
**London WC1A 2RA (GB)**

Courier Press, Leamington Spa, England.

## Description

The invention relates to the treatment of zeolites to enhance their activity.

The silica-to-alumina mole ratio of a zeolite is often variable; for example, zeolite X can be synthesized with a silica-to-alumina ratio of from 2 to 3; zeolite Y from 3 to about 6. In some zeolites, the upper limit of silica-to-alumina ratio is unbounded, as in the case of ZSM-5 wherein the silica-to-alumina mole ratio is at least 5. US—A—3,941,871 discloses ZSM-5 essentially free of aluminum. US—A—4,061,724, 4,073,865 and 4,104,294 describe microporous crystalline silicas or organosilicates wherein the aluminum content present is at impurity levels.

Because of the extremely low aluminum content of such highly siliceous zeolites, their ion exchange capacity is not as great as materials with a higher aluminum content. Therefore, when these materials are contacted with an acidic solution and thereafter are processed in a conventional manner, they are not as catalytically active as their higher-aluminum counterparts.

According to the present invention a method of increasing the catalytic activity, alpha, of a crystalline zeolite having a constraint index of 1 to 12 and a lattice silicon/non-silicon atomic ratio of at least 20 comprises contacting the zeolite for a period of 1 hour to 30 days at a temperature of at least 100°C with an aqueous solution having a pH of 9 to 12 containing an ion of the formula $M(OH)_4$ where M is Al, B, Fe, Cr or Ga, separating the zeolite from the solution and converting it to the protonated (ie. hydrogen or hydronium) form.

Typical zeolites to which the invention may be applied are ZSM-5, -11, -12, -23, -35, -38 and -48, defined respectively by the x-ray data set forth in US—A—3,702,886, 3,709,979, 3,832,449, 4,076,842, 4,016,245 and 4,046,859 and EP—A—15132. Both aluminosilicate and other, e.g. boro-, chromo-, ferro- and gallosilicate, forms of such zeolites are contemplated as starting materials, as are their effectively pure silica forms.

The invention, may, from another aspect, be regarded as zeolite activation by contacting high silica zeolite under hydrothermal conditions with an alkaline metallate solution comprising at least one tetrahedrally bound hydroxylated metallate at a pH of about 9 to 12, and maintaining the zeolite in contact with the solution at elevated temperature under conditions to introduce tetrahedrally coordinated metallate into the crystalline zeolite.

The technique is particularly advantageous for treating acid ZSM-5 type zeolites having a silica:alumina mole ratio greater than 50:1, in which case alkaline solutions containing aluminate anion may be employed under hydrothermal conditions at elevated temperatures. Nitrogenous bases, such as quaternary ammonium or amine compounds are preferred to maintain the aluminum ion in the desired state for treating the zeolites.

The novel process of this invention permits the preparation of highly siliceous zeolites which have all the desirable properties inherently possessed by such high silica materials yet have an acid cracking activity (alpha value) which heretofore has only been manifested by materials having a higher aluminum content.

The preferred starting material for the process of this invention is a high silica containing ZSM-5. The process is simple in nature and easy to carry out although the results obtained therefrom are dramatic. Nitrogenous bases and/or alkali metal cations can be employed to achieve a pH of at least 7. Preferably a pH greater than 9 up to about 13 is maintained with organic cations, such as amines or quaternary ammonium compounds. Being amphoteric, the ions of the metal M can be supplied by any suitable organic or inorganic salt such as chloride, sulfate, nitrate, acetate, etc. However, at a moderately alkaline pH, (eg. pH 9 to 12) a stable $M(OH)^-_4$ ion becomes available for hydrothermal treatment. This tetrahedral hydroxylated metallate ion is uniquely adapted for enhancing catalytic cracking activity. The hydroxylated metallates which are tetrahedrally coordinated in the zeolite crystalline structure according to the invention are $Ga(OH)^-_4$, $Fe(OH)^-_4$, $Al(OH)^-_4$, $Cr(OH)^-_4$ and $B(OH)^-_4$.

The organic nitrogen-containing cation utilized in the hydrothermal solution can be a tetraalkylammonium cation, such as tetraethylammonium, tetrapropylammonium, tetrabutylammonium, methyl triethylammonium, methyl tripropylammonium, as well as mixtures thereof. The nitrogenous base can include various primary, secondary or tertiary amines especially normal alkyl amines such as n-propylamine, n-butylamine. It is advantageous to carry out the treatment at a pH of at least 7 up to about 13, and most preferably at a pH of 9 to 12. In addition to the organic bases, pH control can be accomplished by adding a suitable inorganic base such as sodium or ammonium hydroxide, to a solution of organic nitrogen-containing cation and aluminum ion.

A particularly preferred embodiment, in the case where aluminum is to be introduced into the lattice, is to use an alkali metal aluminate as the source of aluminum ion. This anion species may be prepared in situ by adding a base such as sodium hydroxide to an aqueous solution of an aluminum salt such as aluminum sulfate, or by dissolving sodium aluminate directly.

The relative proportion of metallate ion and organic nitrogen-containing cation present in the solution is not narrowly critical and usually ranges from 1 to 150 grams of equivalent metal salt per liter of solution and 1 to 200 grams of organic compound per liter of solution. The most preferred solvent is water for reasons of economy and ease of operation; however, various cosolvents may be employed within the inventive concept.

The amount of solution utilized to treat the zeolites is not critical and the solution to zeolite ratio can

# 0 134 332

vary from 1 to 100 grams of solution per gram of zeolite. The amount of solution will vary as a function of its reaction kinetics concentration and desired enhancement of activity.

The process is carried out by treating the zeolite as crystallized or after calcination with the above described solution at elevated temperatures ranging up to 300°C, preferably to 160°C, for periods of time ranging from 1 hour to 30 days, preferably from 1 to 5 days. The hydrothermal conditions may require superatmospheric pressures at above 100°C to maintain adequate ionizing medium to maintain the metallate ion. Autogenous pressure can be maintained by autoclave or the like. Ordinarily pressures of 100 kpa to 1000 kpa are satisfactory.

Following the treatment, the zeolite may be further processed into its catalytically active form by conventional techniques, such as base exchange with appropriate cations such as hydrogen, ammonium, rare earth, and mixtures thereof. The zeolite is then advantageously calcined by heating to a temperature in the range of 200—600°C in an atmosphere such as air, nitrogen, etc., and atmospheric, subatmospheric, or superatmospheric pressure for between about 1 and 48 hours. The zeolite can, if desired, be incorporated in a matrix by techniques well known in the art for use as a catalyst. Conventional binder matrices include inorganic oxides, such as silica, alumina, silica-alumina, etc.

The following examples illustrate the invention.

## Example 1

ZSM-5 of silica/alumina mole ratio 500 (A), 1600 (B) and >30,000 (C) was treated with a solution prepared from 2.55 grams of sodium hydroxide, 10.0 grams of tetrapropylammonium bromide and 7.2 grams of $Al_2(SO_4)_3 \cdot 14H_2O$ and 115 grams of water under hydro-treating conditions: 100°C (212°F) for 6 hours at 1 atmosphere pressure (bar). The solution to zeolite weight ratio was 3.4 parts of solution per part of zeolite, the pH 9.9. (Zeolites A and B, were calcined in nitrogen at 540°C (1000°F) for 3 hours prior to treatment. Zeolite C was used as crystallized without calcination).

The three zeolites were then processed into their active form by calcination in nitrogen at 540°C (1000°F) followed by ammonium exchange with an aqueous solution of ammonium nitrate at ambient temperatures to remove sodium and/or excess aluminum ions. Finally, all three were air calcined at a temperature of 540°C (1000°F) for three hours. The three zeolites, before and after treatment, were evaluated for hydrocarbon cracking activity (alpha). (This test is described in Journal of Catalysis, Volume 4, pages 522—529, August 1965). The results obtained are shown in the following table:

### TABLE 1

| Material | A | B | C |
|---|---|---|---|
| Zeolite | ZSM-5 | ZSM-5 | ZSM-5 |
| $SiO_2/Al_2O_3$ | 500:1 | 1600:1 | >30,000:1 |
| Form | Acid (calcined) | Acid (calcined) | Acid (as crystallized) |
| α (Untreated acid form) | 10 | 1.7 | 0.1 |
| α (Treated acid form) | 27 | 15 | 2.3 |
| Enhancement | 2.7 | 8.8 | 23 |

It can be seen that the process of the invention resulted in a marked increase of activity. Thus, the ZSM-5 having a silica-to-alumina ratio of 500 had an alpha value of 10 prior to activation in accordance with the novel process of this invention, and thereafter its activity was raised to a value of 27. The effects of the alpha enhancement are more pronounced as the silica-to-alumina increases.

## Comparative Examples 2—8

The following comparative examples demonstrate that the simple addition of aluminum either by impregnation or exchange cannot achieve the activity enhancement of high silica zeolites.

## Example 2

Four grams of type C low Al ZSM-5 (containing 50 ppm $Al_2O_3$) in its $NH_4$ form are impregnated with solution of 0.03 g $Al(NO_3)_3$ $9H_2O$ in 2 g water. The wet zeolite mix is dried slowly, slugged and sized into 14/25 mesh (1.41/0.71 mm). The resultant catalyst is activated at 540°C (1000°F) for three hours. The alpha value is 0.38.

## Example 3

Zeolite C catalyst is treated in ammonium form in a manner similar to those described in Example 2 except using 0.15 g $Al(NO_3)_3 \cdot 9H_2O$. The alpha value is 0.56.

3

Example 4

Ammonium Zeolite C is treated in a manner similar to Example 2 except using 0.3 g $Al(NO_3)_3 \cdot 9H_2O$. The alpha value is 0.81.

Example 5

Zeolite C is treated by impregnating 4 g of Type C low alumina ZSM-5 in its $NH_4$ form with 0.13 g of $NaAlO_2$ dissolved in 2 g of $H_2$. The wet mix was dried at 110°C (23°F) for three hours and then calcined at 540°C (1000°F) for three hours. The Na content of the sample was reduced by $NH_4$ exchange. The sample was finally sized to 14/25 (1.41/0.71 mm) mesh and activated at 540°C (1000°F) for three hours again. The alpha activity of the sample was 0.1.

Example 6

This catalyst is prepared in a similar manner as described in Example 5 except that the "as crystallized" low alumina ZSM-5 is used as base material. The alpha value was 0.43.

Example 7

Four grams of "as synthesized" low alumina ZSM-5 is exchanged with a solution of 1.5 g $Al(NO_3)_3 \cdot 9H_2O$ in 20 ml of $H_2O$. After mixing for 2 hours the sample is filtered, washed and dried. The sample is then sized to 14/25 mesh (1.41/0.71 mm) and calcined at 1000°F (540°C) for three hours and then exchanged with $NH_4NO_3$ solution to remove Na to 0.02% wt. The catalyst is finally activated in air at 540°C (1000°F) for three hours. The alpha activity of the catalyst is found to be 0.24.

Example 8

This catalyst is treated in a similar manner to Example 7 except that 1.18 $Al_2(OH)_5Cl$ is used instead of $Al(NO_3)_3 \cdot 9H_2O$. The alpha activity of the catalyst was found to be 0.31.

The results obtained in Examples 2—8 are shown in Table 2, wherein it is demonstrated that the results obtained are distinctly inferior to the claimed invention as illustrated in Table 1.

TABLE 2

Aluminum addition to high silica zeolites

| Example No. | 2 | 3 | 4 | 5 | 6 | 7 | 8 |
|---|---|---|---|---|---|---|---|
| **Base material** | | | | | | | |
| Zeolite | ← | | | ZSM-5 | | | → |
| $SiO_2/Al_2O_3$ | ← | | | 30,000 | | | → |
| Form | $NH_4$ | $NH_4$ | $NH_4$ | $NH_4$ | As Crystallized ——→ | | |
| Treating agent | $Al(NO_3)_3$ | ——— | | —$NaAlO_2$ ——→ | | $Al(NO_3)_3$ | $Al_2(OH)_5Cl$ |
| Method of treat | Impregnation | ——— | | ——→ | | EXCH | EXCH |
| %$Al_2O_3$ Incorporated (Based on zeolite) | 0.1 | 0.5 | 2 | 0.5 | 0.5 | 0.5 | 0.5 |
| Alpha of H Form untreated | ← | | →  0.2 | | ——— | | → |
| Treated | 0.38 | 0.56 | 0.81 | 0.2 | 0.43 | 0.24 | 0.31 |

**Claims**

1. A method for increasing the catalytic activity, alpha, of a crystalline zeolite having a constraint index of 1 to 12 and a lattice silicon/non-silicon atomic ratio of at least 20 which comprises contacting the zeolite for a period of 1 hour to 30 days at a temperature of at least 100°C with an aqueous solution having a pH of 9 to 12 containing an ion of the formula $M(OH)^-_4$ where M is Al, B, Fe, Cr or Ga, separating the zeolite from the solution and converting it to the protonated form.

2. A method according to claim 1 wherein pH is determined by the presence of alkali or nitrogenous base.

3. A method according to claim 2 wherein the nitrogenous base is a tetraalkylammonium compound.

4. A method according to claim 2 wherein the nitrogenous base is an alkylamine.

5. A method according to claim 2 wherein the nitrogenous base is tetraethylammonium, tetrapropylammonium, tetrabutylammonium, methyltriethylammonium, methyltripropylammonium, propylamine and/or butylamine.

6. A method according to any preceding claim wherein the ion M(OH)$^-_4$ is derived from an organic or inorganic salt of M.

7. A method according to any of claims 1 to 5 wherein the ion Al(OH)$^-_4$ is derived from sodium aluminate.

8. A method according to claim 6 wherein the metal salt is present in a concentration of 1 to 150 gram equivalents per liter and a nitrogenous base is present in a concentration of 1 to 200 g/liter.

9. A method according to any preceding claim wherein the aqueous solution/zeolite weight ratio is from 1 to 100.

10. A method according to any preceding claim wherein the zeolite is calcined at a temperature of 200 to 600°C before the contacting.

11. A method according to any preceding claim wherein the contacting is carried out at a temperature of 100 to 300°C.

12. A method according to any preceding claim wherein the contacting is carried out at a temperature of 100 to 150°C.

13. A method according to any preceding claim wherein the contacting is carried out at a pressure of 100 kpa to 10,000 kpa.

14. A method according to any preceding claim wherein the conversion of the zeolite to the protonated form is effected by hydrolysis or by ammonium exchange followed by calcination at 200 to 600°C.

15. A method according to any preceding claim wherein the non-silicon lattice element of the initial zeolite is other than aluminum.

16. A method according to any of claims 1 to 14 wherein the initial zeolite is an aluminosilicate having a silica/alumina ratio greater than 500, preferably greater than 1600.

17. A method according to any preceding claim in which the initial zeolite is one synthesized from a reaction mixture in which aluminum is present only as an impurity.

18. A method according to any preceding claim in which the zeolite has a constraint index of 1 to 12.

19. A method according to any of claims 1 to 17 in which the zeolite is ZSM-5, ZSM-11, ZSM-12, ZSM-23, ZSM-35, ZSM-38 or ZSM-48.

20. Use as a catalyst, or catalyst component, for the conversion of organic compounds of a zeolite obtained by the method claimed in any of claims 1 to 19.

**Patentansprüche**

1. Verfahren zur Erhöhung der katalytischen Wirksamkeit Alpha eines kristallinen Zeoliths mit einem Zwangsindex von 1 bis 12 und einem atomaren Gitterverhältnis von Silizium/Nicht-Silizium von mindestens 20, bei dem der Zeolith während eines Zeitraumes von einer Stunde bis 30 Tagen bei einer Temperatur von mindestens 100°C mit einer wässrigen Lösung in Kontakt gebracht wird, die einen pH-Wert von 9 bis 12 aufweist, ein Ion der Formel M(OH)$^-_4$ enthält, worin M Al, B, Fe, Cr oder Ga ist, der Zeolith aus dieser Lösung abgetrennt wird und in die protonierte Form umgewandelt wird.

2. Verfahren nach Anspruch 1, worin der pH-Wert durch das Vorhandensein von Alkali oder einer stickstoffhaltigen Base bestimmt wird.

3. Verfahren nach Anspruch 2, worin die stickstoffhaltige Base eine Tetraalkylammonium-Verbindung ist.

4. Verfahren nach Anspruch 2, worin die stickstoffhaltige Base ein Alkylamin ist.

5. Verfahren nach Anspruch 2, worin die stickstoffhaltige Base Tetraethylammonium, Tetrapropylammonium, Tetrabutylammonium, Methyltriethylammonium, Propylamin und/oder Butylamin ist.

6. Verfahren nach einem der vorstehenden Ansprüche, worin das Ion M(OH)$^-_4$ aus einem organischen oder anorganischen Salz von M abgeleitet wird.

7. Verfahren nach einem der Ansprüche 1 bis 5, worin das Ion Al(OH)$^-_4$ von Natriumaluminat abgeleitet wird.

8. Verfahren nach Anspruch 6, worin das Metallsalz in einer Konzentration von 1 bis 150 Grammäquivalent/1 vorhanden ist, und die stickstoffhaltige Base in einer Konzentration von 1 bis 200 g/l vorhanden ist.

9. Verfahren nach einen der vorstehenden Ansprüche, worin das Gewichtsverhältnis wässrige Lösung/Zeolith von 1 bis 100 beträgt.

10. Verfahren nach einem der vorstehenden Ansprüche, worin der Zeolith vor dem Kontakt bei einer Temperatur von 200 bis 600°C kalziniert wird.

11. Verfahren nach einem der vorstehenden Ansprüche, worin der Kontakt bei einer Temperatur von 100 bis 300°C durchgeführt wird.

12. Verfahren nach einem der vorstehenden Ansprüche, worin der Kontakt bei einer Temperatur von 100 bis 150°C durchgeführt wird.

13. Verfahren nach einem der vorstehenden Ansprüche, worin der Kontakt bei einem Druck von 100 kPa bis 10 000 kPa durchgeführt wird.

14. Verfahren nach einem der vorstehenden Ansprüche, worin die Umwandlung des Zeoliths zur protonierten Form durch Hydrolyse oder durch Ammoniumaustausch, gefolgt von Kalzinierung bei 200 bis 600°C durchgeführt wird.

15. Verfahren nach einem der vorstehenden Ansprüche, worin das Nicht-Silizium-Gitterelement des Ausgangszeoliths von Aluminium verschieden ist.

16. Verfahren nach einem der Ansprüche 1 bis 14, worin der Ausgangszeolith ein Aluminosilicat mit einem Siliziumdioxid/Aluminiumoxid-Verhältnis von größer als 500, vorzugsweise größer als 1600 ist.

17. Verfahren nach einem der vorstehenden Ansprüche, worin der Ausgangszeolith ein solcher ist, der aus einer Reaktionsmischung synthetisiert wurde, in der Aluminium nur als Verunreinigung vorhanden ist.

18. Verfahren nach einem der vorstehenden Ansprüche, worin der Zeolith einen Zwangsindex von 1 bis 12 aufweist.

19. Verfahren nach einem der Ansprüche 1 bis 17, worin der Zeolith ZSM-5, ZSM-11, ZSM-12, ZSM-23, ZSM-35, ZSM-38 oder ZSM-48 ist.

20. Verwendung eines Zeoliths, der durch ein Verfahren nach einem der Ansprüche 1 bis 19 erhalten wurde, als Katalysator oder Katalysatorkomponente für die Umwandlung organischer Verbindungen.

**Revendications**

1. Un procédé d'amélioration de l'activité catalytique alpha d'une zéolite cristalline présentant un indice de contrainte de 1 à 12, et un rapport atome de silicium/atome autre que le silicium dans le réseau au moins égal à 20, qui consiste à mettre la zéolite pendant une période d'une heure à 30 jours et à une température d'au moins 100°C au contact d'une solution aqueuse présentant un pH de 9 à 12, contenant un ion ayant le formule $M(OH)^-_4$ dans laquelle M est Al, B, Fe, Cr ou Ga, à séparer la zéolite de la solution et à la convertir en sa forme protonée.

2. Un procédé selon la revendication 1, dans lequel le pH est déterminé par la présence d'une base contenant de l'azote ou un métal alcalin.

3. Un procédé selon la revendication 2, dans lequel la base contenant de l'azote est un composé tétra-alkylammonium.

4. Un procédé selon la revendication 2, dans lequel la base contenant de l'azote est une alkylamine.

5. Un procédé selon la revendication 2, dans lequel la base contenant de l'azote consiste en tétra-éthylammonium, tétrapropylammonium, tétrabutylammonium, méthyltriéthylammonium, méthyltripropylammonium, propylamine et/ou butylamine.

6. Un procédé selon l'une quelconque des revendications précédentes, dans lequel l'ion $M(OH)^-_4$ dérive d'un sel organique ou minéral de M.

7. Un procédé selon l'une quelconque des revendications 1 à 5, dans lequel l'ion $Al(OH)^-_4$ dérive d'un aluminate de sodium.

8. Un procédé selon la revendication 6, dans lequel le sel métallique est présent à une concentration de 1 à 150 g d'équivalents par litre et que la base contenant de l'azote est présente à une concentration de 1 à 200 g/l.

9. Un procédé selon l'une quelconque des revendications précédentes, dans lequel le rapport pondéral solution aqueuse/zéolite est compris entre 1 et 100.

10. Un procédé selon l'une quelconque des revendications précédentes, dans lequel la zéolite est calcinée à une température comprise entre 200 et 600°C préalablement à l'étape de mise en contact.

11. Un procédé selon l'une quelconque des revendications précédentes, dans lequel la mise en contact est effectuée à une température comprise entre 100 et 300°C.

12. Un procédé selon l'une quelconque des revendications précédentes, dans lequel le contact est mis en oeuvre à une température comprise entre 100 et 150°C.

13. Un procédé selon l'une quelconque des revendications précédentes, dans lequel le contact est mis en oeuvre à une pression comprise entre 100 et 10 000 kPa.

14. Un procédé selon l'une quelconque des revendications précédentes, dans lequel la conversion de la zéolite en forme protonée est effectuée par hydrolyse ou par échange d'ammonium, suivi d'une calcination à une température de l'ordre de 200 à 600°C.

15. Un procédé selon l'une quelconque des revendications précédentes, dans lequel l'élément du réseau autre que le silicium de la zéolite initiale est autre que de l'aluminium.

16. Un procédé selon l'une quelconque des revendications 1 à 14, dans lequel la zéolite initiale est un aluminosilicate présentant un rapport silice/alumine supérieur à 500 et de préférence supérieur à 1 600.

17. Un procédé selon l'une quelconque des revendications précédentes, dans lequel la zéolite initiale est obtenue par synthèse à partir d'un mélange réactionnel dans lequel l'aluminium n'est présent qu'à titre d'impuretés.

18. Un procédé selon l'une quelconque des revendications précédentes, dans lequel la zéolite présente un indice de contrainte de 1 à 12.

19. Un procédé selon l'une quelconque des revendications 1 à 17, dans lequel la zéolite consiste en ZSM-5, ZSM-11, ZSM-12, ZSM-23, ZSM-35, ZSM-38 et ZSM-48.

20. Application en tant que catalyseur, ou constituant catalytique, pour la conversion de composés organiques d'une zéolite obtenue par la méthode selon l'une quelconque des revendications 1 à 19.